# EUROPEAN PATENT APPLICATION

(11) **EP 4 768 451 A2**
(43) Date of publication of application: **01.07.2026**
(21) Application number: 26175560.7
(22) Date of filing: 16.02.2024
(51) Int. Cl.: C02F 3/00

(54) **A MODIFIED MEMBRANE BIOREACTOR (MBR) SYSTEM AND METHOD FOR REMOVING PER- AND POLYFLUOROALKYL SUBSTANCES (PFAS) FROM A FLOW OF WASTEWATER AND/OR LANDFILL LEACHATE**

(30) Priority: 07.08.2023 US 202363517950 P
(62) Divisional of application: 24852494.4
(71) Applicant: Emerging Compounds Treatment Technologies, Inc., Little Rock, AR 72118 (US)
(72) Inventor: RODRIGUEZ, Paul, Maine, 04074 (US); WOODARD, Steven E, Maine, 04021 (US); KEMPISTY, David, Colorado, 80919 (US)
(74) Representative: Dolleymores

(57) **Abstract**

A MBR system for removing PFAS from a flow of wastewater and/or landfill leachate includes an MBR which receives the flow of wastewater and/or landfill leachate having PFAS therein. An impregnation subsystem receives a flow of mixed liquor from the MBR and a predetermined amount PAC to maintain a predetermined ratio of PAC to biomass in the MBR and blends the biomass with the PAC to form PAC-impregnated biological flocs. An outlet coupled to impregnation subsystem outputs a flow of PAC-impregnated biological flocs to the MBR such that the PAC-impregnated biological flocs in the MBR adsorb to and remove a majority of the PFAS from the flow of wastewater and/or landfill leachate and the MBR outputs a flow of treated wastewater and/or landfill leachate having a majority of the PFAS removed.

## Description

### RELATED APPLICATIONS

This application claims benefit of and priority to U.S. Non-Provisional Application Serial No. 18/443,736 filed February 16, 2024 and U.S. Provisional Application Serial No. 63/517,950 filed August 7, 2023 under 35 U.S.C. §§119, 120, 363, 365, and 37 C.F.R. §1.55 and §1.78, which is incorporated by reference herein.

### FIELD OF THE INVENTION

This invention relates to a modified membrane bioreactor (MBR) system and method for removing per- and polyfluoroalkyl substances (PFAS) from a flow of wastewater and/or landfill leachate.

### BACKGROUND OF THE INVENTION

A membrane bioreactor (MBR) is a device or process which combines a microfiltration or ultrafiltration membrane with a bioreactor. The bioreactor includes a chamber which supports a biologically active environment where microorganisms, such as bacteria, protozoa, and the like, the "biomass", grow and consume certain contaminants in wastewater and/or landfill leachate. There are at least three types of bioreactors: 1) suspended growth bioreactors, where the biomass grows into biological flocs that are separated from the treated wastewater and/or landfill leachate by secondary clarification or membrane filtration, 2) attached growth (or biofilm) bioreactors, where the biomass grows attached to carriers, and 3) hybrid bioreactors, which combines suspended and attached growth. In MBRs, the membranes act as a solid-liquid separation device by retaining the biomass within the bioreactor before discharging the filtered, treated effluent to the environment. One key function of the membrane(s) is to separate solids from a liquid. The membrane(s) may be located internal or external to the bioreactor.

Conventional powered activated carbon (PAC) may be used to adsorb and remove various decomposable organic contaminants from wastewater and/or landfill leachate. PAC treatment (PACT) may be combined with an MBR system (PACT-MBR) to enhance the biodegradation of slowly biodegradable organics and other decomposable organic contaminants. *See e.g.,* Takase, O., *Powered Activated Carbon Treatment Membrane Bioreactor (PACT MBR) using Ceramic Flat Sheet Membrane,* Mieden Review, Series No. 176 2019 No. 2, incorporated by reference herein.

To date, the conventional PACT-MBR discussed above has not been optimized for maximum contaminant removal. These conventional systems typically add PAC to an MBR without optimizing the PAC particle size or ratio of the PAC to biomass. These conventional systems also do not impregnate the biological flocs with PAC. Utilizing PAC in an MBR can also be expensive because the PAC is a consumable additive that is removed along with the waste biological solids, and therefore must be added to the MBR on a regular basis, e.g., multiple times a week.

Per- and polyfluoroalkyl substances (PFAS) are a class of man-made compounds that have been used to manufacture consumer products and industrial chemicals, including, *inter alia,* aqueous film forming foams (AFFFs). AFFFs have been the product of choice for firefighting at military and municipal fire training sites around the world. AFFFs have also been used extensively at oil and gas refineries for both fire training and firefighting exercises. AFFFs work by blanketing spilled oil/fuel, cooling the surface, and preventing re-ignition. PFAS in AFFFs have contaminated the groundwater, surface water, and wastewater and/or landfill leachate at many of these sites and refineries, including more than 100 U.S. Air Force bases.

PFAS may be used as surface treatment/coatings in consumer products such as carpets, upholstery, stain resistant apparel, cookware, paper, packaging, and the like, and may also be found in chemicals used for chemical plating, electrolytes, lubricants, and the like, which may eventually end up in waste water and/or landfill leachate.

PFAS are bio-accumulative in wildlife and humans because they typically remain in the body for extended periods of time. Laboratory PFAS exposure studies on animals have shown problems with growth and development, reproduction, and liver damage. In 2016, the U.S. Environmental Protection Agency (EPA) issued the following health advisories (HAs) for perfluorooctanesulfonic acid (PFOS) and perfluorooctanoic acid (PFOA): 0.07 µg/L for both the individual constituents and the sum of PFOS and PFOA concentrations, respectively.

PFAS are very difficult to treat largely because they are extremely stable compounds which include carbon-fluorine bonds. Carbon-fluorine bonds are the strongest known covalent bonds in nature and are highly resistant to breakdown and therefore not considered decomposable.

To date, conventional PACT-MBRs have not been used to remove PFAS from a flow of wastewater or landfill leachate because conventional PACT-MBRs are designed to enhance the biodegradation of slowly biodegradable organics and other decomposable organic contaminants. As discussed above, PFAS are highly resistant to breakdown and therefore not considered decomposable. Additionally, conventional PACT-MBRs do not impregnate the PAC into biological flocs, and as explained above, can be expensive to operate because the PAC is a consumable additive.

Thus, there is a need for a modified MBR system which optimizes the particle size of the PAC, optimizes the ratio of the PAC to biomass, impregnates the biological flocs to effectively and efficiently remove PFAS from a flow of wastewater or landfill leachate, and reduces the overall operational cost of the system and method thereof.

### BRIEF SUMMARY OF THE INVENTION

In one aspect, a modified membrane bioreactor (MBR) system for removing per- and polyfluoroalkyl substances (PFAS) from a flow of wastewater and/or landfill leachate is featured. The system includes an MBR configured to receive the flow of wastewater and/or landfill leachate having PFAS therein. The MBR includes biomass, a diffuser subsystem, and a membrane filter subsystem. An impregnation subsystem includes at least one impregnation tank and at least one mixer. The impregnation subsystem receives a flow of mixed liquor from the MBR and a predetermined amount powered activated carbon (PAC) to maintain a predetermined ratio of PAC to biomass in the MBR and blends the biomass with the PAC to form PAC-impregnated biological flocs. An outlet coupled to the at least one impregnation tank outputs a flow of PAC-impregnated biological flocs to the MBR such that the PAC-impregnated biological flocs in the MBR adsorb to and remove a majority of the PFAS from the flow of wastewater and/or landfill leachate and the MBR outputs a flow of treated wastewater and/or landfill leachate having a majority of the PFAS removed.

In one embodiment, the predetermined ratio of PAC to biomass may be in the range of about 0.1:1 to about 5:1. The predetermined ratio of PAC to biomass may be set to enhance at least one of: the removal of PFAS from the flow of wastewater and/or landfill leachate, membrane filtration, or nitrification and the removal of biodegradable organic matter as measured by biochemical oxygen demand (BOD). The MBR may be configured to output a waste flow of PAC-impregnated biological flocs having PFAS adsorbed thereto. The waste flow of PAC-impregnated biological flocs having PFAS adsorbed thereto may be set to control a biological population of microorganisms in mixed liquor in the MBR. The waste flow of PAC-impregnated biological flocs having PFAS adsorbed thereto may be used to create a waste product. The waste product may be directed to at least one of: a supercritical water oxidation (SCWO) process or a plasma gasification subsystem configured to destroy the waste product including the PAC-impregnated biological flocs having the PFAS adsorbed thereto. The PAC-impregnated biological flocs may increase treatment kinetics thereby reducing the required hydraulic retention time and size of the MBR. The at least one impregnation tank may be sized and configured to augment PAC impregnation into the biological flocs. The blending intensity in the impregnation tank may be configured to augment PAC impregnation into the biological flocs. The PAC-impregnated biological flocs may enhance membrane filtration.

In another aspect, a modified membrane bioreactor (MBR) system for removing per- and polyfluoroalkyl substances (PFAS) from a flow of wastewater and/or landfill leachate is featured. The system includes an MBR configured to receive a flow of wastewater and/or landfill leachate having PFAS therein. The membrane bioreactor includes biomass, a diffuser subsystem, and a membrane filter subsystem. An impregnation subsystem includes at least one impregnation tank and at least one mixer. The impregnation subsystem receives a flow of mixed liquor from the MBR and a predetermined amount GAC reactivation waste product to maintain a predetermined ratio of GAC reactivation waste product to biomass in the MBR and configured to blend the biomass with the GAC reactivation waste product to form GAC reactivation waste product-impregnated biological flocs. An outlet coupled to the at least one impregnation tank outputs a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate and the MBR outputs a flow of treated wastewater and/or landfill leachate having a majority of the PFAS removed.

In one embodiment, the predetermined ratio of GAC reactivation waste product to biomass may be in the range of about 0.1:1 to about 5:1. The predetermined ratio of GAC reactivation waste product to biomass may be set to enhance at least one of: the removal of PFAS from the flow of wastewater and/or landfill leachate, membrane filtration, or nitrification and the removal of biodegradable organic matter as measured by biochemical oxygen demand (BOD). The MBR may be configured to output a waste flow of GAC reactivation waste product-impregnated biological flocs having PFAS adsorbed thereto. The waste flow of GAC reactivation waste product having PFAS adsorbed thereto may be set to control a biological population of microorganisms in mixed liquor in the MBR. The waste flow of GAC reactivation waste product-impregnated biological flocs having PFAS adsorbed thereto may be used to create a waste product. The waste product may be directed to at least one of: a supercritical water oxidation (SCWO) process or a plasma gasification subsystem configured to destroy the waste product including the GAC reactivation waste product-impregnated biological flocs and the PFAS adsorbed thereto. The GAC reactivation waste product-impregnated biological flocs may increase treatment kinetics thereby reducing the required hydraulic retention time and size of the MBR. The at least one impregnation tank may be sized and configured to augment GAC reactivation waste product impregnation into the biological flocs. Blending intensity in the impregnation tank may be configured to augment GAC reactivation waste product impregnation into the biological flocs. The GAC reactivation waste product-impregnated biological flocs may enhance membrane filtration.

In another aspect, a modified membrane bioreactor (MBR) method for removing per- and polyfluoroalkyl substances (PFAS) from a flow of wastewater and/or landfill leachate, includes receiving a flow of mixed liquor from the MBR and a predetermined amount powered activated carbon (PAC) to maintain a predetermined ratio of PAC to biomass in the MBR, blending the biomass with the PAC to form PAC-impregnated biological flocs, outputting a flow of PAC-impregnated biological flocs to the MBR such that the PAC-impregnated biological flocs in the MBR adsorb to and remove a majority of the PFAS from the flow of wastewater and/or landfill leachate, and outputting a flow of treated wastewater and/or landfill leachate having a majority of the PFAS removed.

In one embodiment, the predetermined ratio of PAC to biomass may be in the range of about 0.1:1 to about 5:1. The predetermined ratio of PAC to biomass may be set to enhance at least one of: the removal of PFAS from the flow of wastewater and/or landfill leachate, membrane filtration, or nitrification and the removal of biodegradable organic matter as measured by biochemical oxygen demand (BOD). The method may include outputting a waste flow of PAC-impregnated biological flocs including PFAS adsorbed thereto. The waste flow of PAC-impregnated biological flocs having PFAS adsorbed thereto may be set to control a biological population of microorganisms in mixed liquor in the MBR. The waste flow of PAC-impregnated biological flocs having PFAS adsorbed thereto may be used to create a waste product. The waste product including the PAC-impregnated biological flocs having the PFAS adsorbed thereto may be directed to at least one of: a supercritical water oxidation (SCWO) process or a plasma gasification subsystem configured to destroy the waste product. The waste product including the PAC-impregnated biological flocs having the PFAS adsorbed thereto. The PAC-impregnated biological flocs may increase treatment kinetics thereby reducing the required hydraulic retention time and size of the MBR. The blending may include blending at an intensity which augments PAC impregnation into the biological flocs. The PAC-impregnated biological flocs may enhance membrane filtration.

In another aspect, a modified membrane bioreactor (MBR) method for removing per- and polyfluoroalkyl substances (PFAS) from a flow of wastewater and/or landfill leachate includes receiving a flow of mixed liquor from the MBR and a predetermined amount granular activated carbon (GAC ) reactivation waste product to maintain a predetermined ratio of GAC reactivation waste product to biomass in the MBR, blending the biomass with the GAC reactivation waste product to form GAC reactivation waste product-impregnated biological flocs, outputting a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate, and outputting a flow of treated wastewater and/or landfill leachate having a majority of the PFAS removed.

In one embodiment, the predetermined ratio of GAC reactivation waste product to biomass may be in the range of about 0.1:1 to about 5:1. The predetermined ratio of GAC reactivation waste product to biomass may be set to enhance at least one of: the removal of PFAS from the flow of wastewater and/or landfill leachate, membrane filtration, or nitrification and the removal of biodegradable organic matter as measured by biochemical oxygen demand (BOD). The method may include outputting a waste flow of GAC reactivation waste product-impregnated biological flocs having PFAS adsorbed thereto. The waste flow of GAC reactivation waste product-impregnated biological flocs having PFAS adsorbed thereto may be set to control a biological population of microorganisms in mixed liquor in the MBR. The waste flow of GAC reactivation waste product-impregnated biological flocs having PFAS adsorbed thereto may be used to create a waste product. The waste product may be directed to at least one of: a supercritical water oxidation (SCWO) process or a plasma gasification subsystem configured to destroy the waste product including the GAC reactivation waste product-impregnated biological flocs having the PFAS adsorbed thereto. The GAC reactivation waste product-impregnated biological flocs may increase treatment kinetics thereby reducing the required hydraulic retention time and size of the MBR. The blending may include blending at an intensity which augments GAC reactivation waste product impregnation into the biological flocs. The GAC reactivation waste product- impregnated biological flocs may enhance membrane filtration.

### BRIEF DESCRIPTION OF THE SEVERAL VIEWS OF THE DRAWINGS

Other objects, features and advantages will occur to those skilled in the art from the following description of a preferred embodiment and the accompanying drawings, in which:
Fig. 1 is a is a schematic block diagram showing the primary components of one example of the modified MBR system for removing PFAS from a flow of wastewater and/or landfill leachate;
Fig. 2 shows in further detail examples of PAC impregnated biological flocs and/or GAC reactivation waste product-impregnated biological flocs;
Figs. 3A, 3B, and 3C are microscopic photographs showing examples of GAC reactivation waste product-impregnated biological flocs;
Fig. 4 is a is a flow chart the primary components of one example of the modified MBR method for removing PFAS from a flow of wastewater and/or landfill leachate; and

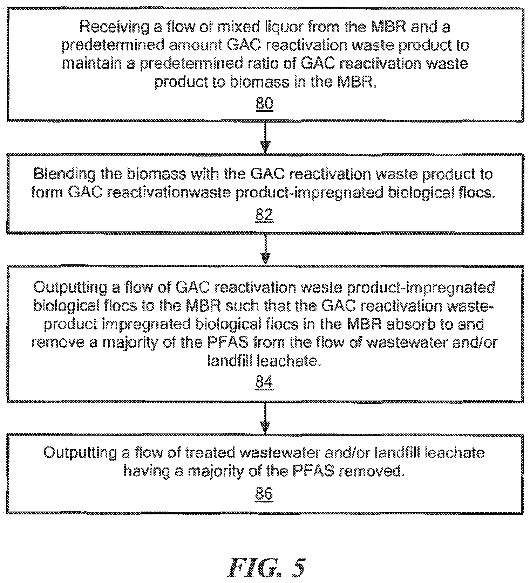

Fig. 5 is a is a flow chart the primary components of another example of the modified MBR method for removing PFAS from a flow of wastewater and/or landfill leachate.

### DETAILED DESCRIPTION OF THE INVENTION

Aside from the preferred embodiment or embodiments disclosed below, this invention is capable of other embodiments and of being practiced or being carried out in various ways. Thus, it is to be understood that the invention is not limited in its application to the details of construction and the arrangements of components set forth in the following description or illustrated in the drawings. If only one embodiment is described herein, the claims hereof are not to be limited to that embodiment. Moreover, the claims hereof are not to be read restrictively unless there is clear and convincing evidence manifesting a certain exclusion, restriction, or disclaimer.

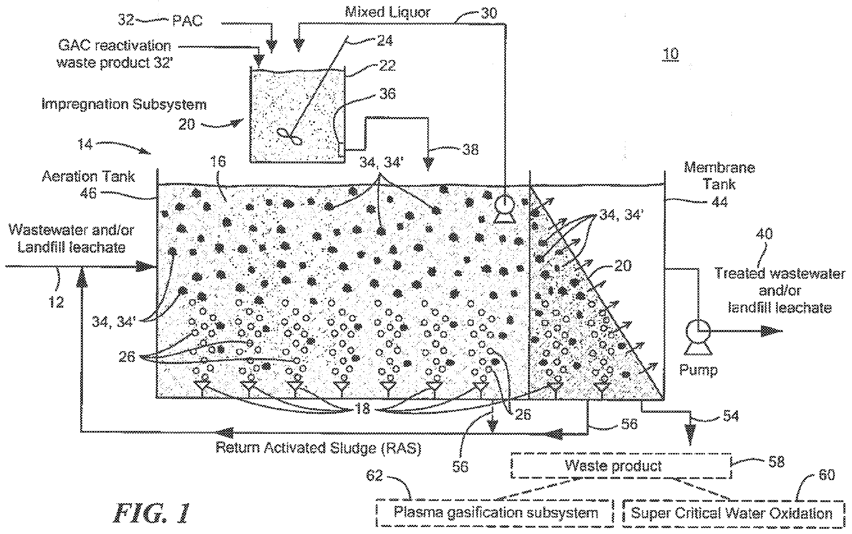

There is shown in Fig.1, one example of powdered activated carbon (PAC) membrane bioreactor (MBR) system 10 and the method thereof for removing PFAS from flow 12 of wastewater and/or landfill leachate. System 10 includes MBR 14 which receives flow 12 of wastewater and/or landfill leachate having PFAS therein. MBR 14 includes: *inter alia,* biomass, *e.g.,* microorganisms, such as bacteria, protozoa, and the like, indicated generally at 16; diffuser subsystem 18 which injects dissolved oxygen 26 into MBR 14; and membrane filter subsystem 20. Membrane filter subsystem 20 may be located in membrane tank 44 as shown, or may be located in aeration tank 46.

In one design, system 10 also includes impregnation subsystem 20 which includes at least one impregnation tank 22 and at least one mixer 24 as shown. Impregnation subsystem 20 receives flow 30 of mixed liquor (a mixture of wastewater and/or landfill leachate, biomass 16, water, and dissolved oxygen) from MBR 14 and predetermined amount of PAC 32 to maintain a predetermined ratio of PAC 32 to biomass 16 in MBR 14. Impregnation subsystem 20 blends biomass 16 with PAC 32, preferably under high shear conditions or mixing energy (velocity gradient), e.g., about 100 sec⁻¹ to about 5,000 sec⁻¹ or preferably about 500 sec⁻¹ to about 1,000 sec⁻¹ or similar type mixing energy to form PAC-impregnated biological flocs, exemplarily indicated at 34. In one example, the size of PAC 32 is preferably less than about 600 microns. In another example, the size of PAC 32 may be less than about 100 microns. In yet another example, the size of PAC 32 may be less than about 50 microns, e.g., about 45 microns or smaller.

As known by those skilled in the art, spent granular activated carbon (GAC) may be reactivated for reuse. During this process, fine particles of GAC regeneration waste product are created. These particles can be collected and sieved to form GAC reactivation waste product 32', which has a similar capacity as PAC 32 for removing PFAS from waste water and/or landfill leachate. In one example, the size of GAC reactivation waste product 32' is preferably less than about 600 microns. In another example, the size of GAC reactivation waste product 32' may be less than about 100 microns. In yet another example, the size of GAC reactivation waste product 32' may be less than about 50 microns, e.g., about 45 microns or smaller. Because GAC reactivation waste product 32' is a waste product, that is normally landfilled, it is substantially less expensive than PAC 32 and therefore preferably reduces the overall cost to operate one embodiment of system 10 and the method thereof, as discussed below.

In another example, impregnation subsystem 20 may receive flow 30 of mixed liquor from MBR 14 and predetermined amount of GAC reactivation waste product 32' to maintain a predetermined ratio of GAC reactivation waste product 32' to biomass 16 in MBR 14. Impregnation subsystem 20 blends biomass 16 with GAC reactivation waste product 34', preferably under high shear conditions or mixing energy (velocity gradient), e.g., about 100 sec⁻¹ to about 5,000 sec⁻¹ or preferably about 500 sec⁻¹ to about 1,000 sec⁻¹ or similar type mixing energy to form GAC reactivation waste product-impregnated biological flocs, exemplarily indicated at 34'.

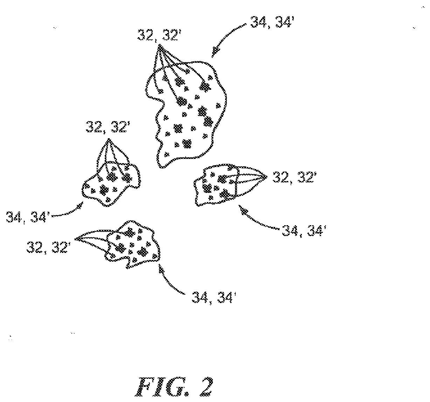

Fig. 2 shows in further detail one example of PAC-impregnated biological flocs 34 or GAC reactivation waste product-impregnated biological flocs 34' with PAC 32 or GAC reactivation waste product 32' therein as shown.

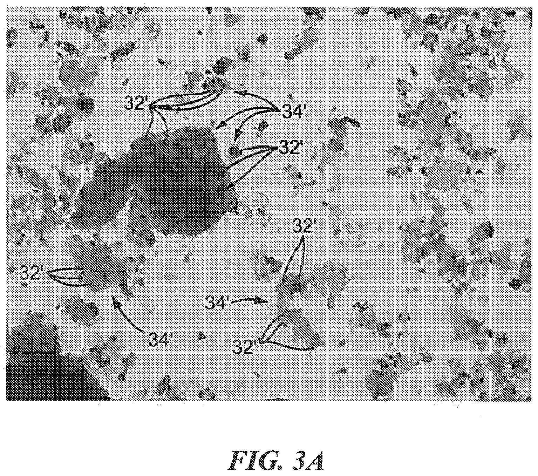

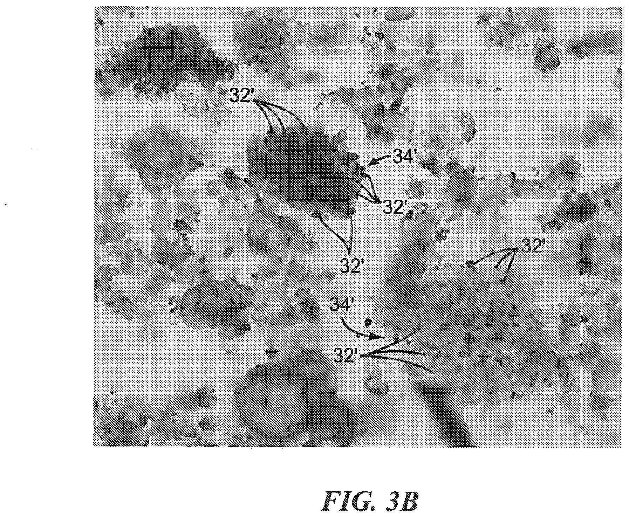

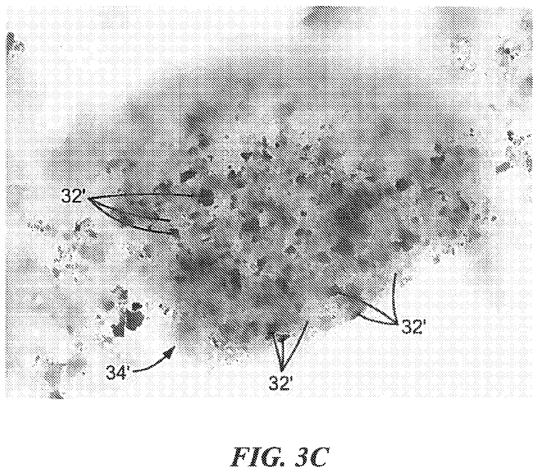

Figs. 3A and 3B are microscopic photographs showing in further detail examples of GAC reactivation waste product-impregnated biological flocs 34' with GAC reactivation waste product 32' therein as shown. Fig., 3C is an enlarged microscopic photograph showing in further detail a single GAC reactivation waste product-impregnated biological floc 34' with GAC reactivation waste product 32' therein.

System 10 also includes outlet 36 coupled to impregnation tank 22 which outputs flow 38 of PAC-impregnated biological flocs 34 and/or GAC reactivation waste product-impregnated biological flocs 34' into MBR 14 as shown. PAC-impregnated biological flocs 34 and/or GAC reactivation waste product-impregnated biological flocs 34' provided by impregnation subsystem 20 preferably maintain PAC-impregnated biological flocs 34 and/or GAC reactivation waste product-impregnated biological flocs 34' in suspension throughout MBR 14. This maximizes contact of PFAS in flow 12 of wastewater and/or landfill leachate with PAC-impregnated biological flocs 34 and/or GAC reactivation waste product-impregnated biological flocs 34' such that the PFAS adsorbs to the PAC-impregnated biological flocs 34 and/or GAC reactivation waste product-impregnated biological flocs 34'. The result is system 10 efficiently and effectively removes a majority of the PFAS from flow 12 and outputs flow 40 of treated wastewater and/or landfill leachate having a majority of PFAS removed. As defined herein, a majority is greater than about 50%.

Blending biomass 16 with PAC 32 and/or GAC reactivation waste product 32' to form PAC-impregnated biological flocs 34 and/or GAC reactivation waste product-impregnated biological flocs 34' as discussed above maximizes contact of PAC 32 and/or GAC reactivation waste product 32' with PFAS in MBR 14 to effectively remove a majority of PFAS in flow 12.

In one example, the predetermined ratio of PAC 32 and/or GAC reactivation waste product 32' to biomass 16 is preferably in the range of about 0.1:1 to about 5:1. The predetermined ratio of PAC 32 and/or GAC reactivation waste product 32' to biomass 16 may be set to enhance the removal of PFAS from flow 12 of wastewater and/or landfill leachate. The predetermined ratio of PAC 32 and/or GAC reactivation waste product 32' to biomass 16 may also be set to enhance nitrification and/or removal of biodegradable organic matter as measured by biochemical oxygen demand (BOD). PAC 32 and/or GAC reactivation waste product 32' also preferably enhances membrane filtration by providing structure to the otherwise amorphous biological floc. The result is that PAC-impregnated biological flocs 34 and/or GAC reactivation waste product-impregnated biological flocs 34' enhance membrane filtration. The predetermined ratio of PAC 32 and/or GAC reactivation waste product 32' to biomass 16 may also be set to optimize membrane filtration.

In one example, flow 12 of wastewater and/or landfill leachate includes, or may be composed entirely of, landfill leachate. In this example, the ratio of PAC 32 and/or GAC reactivation waste product 32' to biomass 16 may be set to enhance treatment of the landfill leachate.

In one design, MBR 14 preferably outputs waste flow 54 of PAC-impregnated biological flocs 34 and/or GAC reactivation waste product-impregnated biological flocs 34' having PFAS absorbed thereto. Waste flow 54 may be output from membrane tank 44 and/or aeration tank 46 to control the biological population of microorganisms in the mixed liquor in MBR 14. Return activated sludge flow 56 may be output from membrane tank to aeration tank 46 to control the distribution of biomass 16 throughout MBR 14.

Waste flow 54 of PAC-impregnated biological flocs 34 and/or GAC reactivation waste product-impregnated biological flocs 34' having PFAS absorbed thereto may be output from MBR 14 as shown to create waste product 58. Waste product 58 preferably includes PAC-impregnated biological flocs 34 and/or GAC reactivation waste product-impregnated biological flocs 34' having PFAS absorb thereto. Waste product 58 is preferably destroyed on-site using a PFAS destruction subsystem. In one example, waste product 58 may be directed to a supercritical water oxidation (SCWO) subsystem 60 which preferably destroys waste product 58, including the PAC-impregnated biological flocs 34 and/or GAC reactivation waste product-impregnated biological flocs 34' and the PFAS adsorbed thereto. In another example, waste product 58 may be directed to a plasma gasification subsystem 62 which preferably destroys waste product 58, including the PAC-impregnated biological flocs 34 and/or GAC reactivation waste product-impregnated biological flocs 34' and the PFAS adsorbed thereto. In other examples, waste product 58 may be destroyed using other PFAS destruction subsystems as known by those skilled in the art.

PAC-impregnated biological flocs 34 and/or GAC reactivation waste product-impregnated biological flocs 34' preferably increase treatment kinetics thereby reducing required hydraulic retention time and size of the MBR 14.

Membrane filter subsystem 20 may include a ceramic membrane filter or filters which minimizes abrasion and wear from the PAC-impregnated biological flocs 34 and/or GAC reactivation waste product-impregnated biological flocs 34'.

Impregnation tank 22 is preferably sized and configured to augment PAC 32 and/or GAC reactivation waste product 32' impregnation of the biomass to create PAC-impregnated biological flocs 34 and/or GAC reactivation waste product-impregnated biological flocs 34'. The blending intensity of impregnation subsystem 20 discussed above preferably augments PAC 32 or GAC reactivation waste product 32' impregnation into the biomass to create PAC-impregnated biological flocs 34 and/or GAC reactivation waste product-impregnated biological flocs 34'.

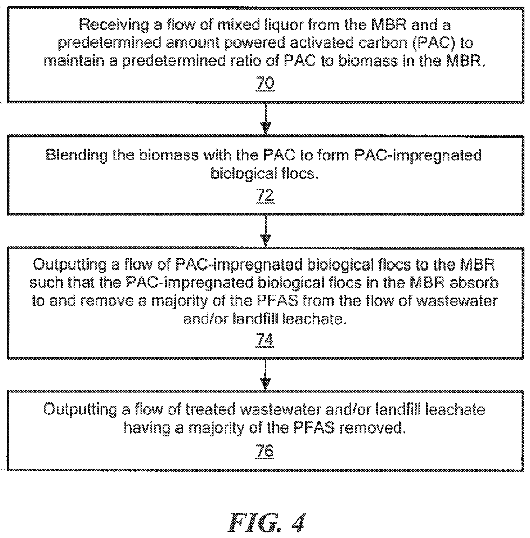

One example of a modified MBR method for removing PFAS from a flow of wastewater and/or landfill leachate includes receiving a flow of mixed liquor from the MBR and a predetermined amount powered activated carbon (PAC) to maintain a predetermined ratio of PAC to biomass in the MBR, step 70, Fig. 4, blending the biomass with the PAC to form PAC-impregnated biological flocs, step 72, outputting a flow of PAC-impregnated biological flocs to the MBR such that the PAC-impregnated biological flocs in the MBR adsorb to and remove a majority of the PFAS from the flow of wastewater and/or landfill leachate, step 74, and outputting a flow of treated wastewater and/or landfill leachate having a majority of the PFAS removed, step 76.

Another example of a modified MBR method for removing PFAS from a flow of wastewater and/or landfill leachate includes receiving a flow of mixed liquor from the MBR and a predetermined amount GAC reactivation waste product to maintain a predetermined ratio of GAC reactivation waste product to biomass in the MBR, step 80, blending the biomass with the GAC reactivation waste product to form GAC reactivation waste product-impregnated biological flocs, step 82, outputting a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate. step 84, and outputting a flow of treated wastewater and/or landfill leachate having a majority of the PFAS removed, step 86.

The result is modified MBR system 10 and the method thereof optimizes the particle size of the PAC, optimizes the ratio of the PAC to biomass, impregnates the biological flocs to effectively and efficiently remove PFAS from a flow of wastewater or landfill leachate, and reduces the overall operational cost of the system and method thereof.

Although specific features of the invention are shown in some drawings and not in others, this is for convenience only as each feature may be combined with any or all of the other features in accordance with the invention. The words "including", "comprising", "having", and "with" as used herein are to be interpreted broadly and comprehensively and are not limited to any physical interconnection. Moreover, any embodiments disclosed in the subject application are not to be taken as the only possible embodiments. Other embodiments will occur to those skilled in the art and are within the following claims.

In addition, any amendment presented during the prosecution of the patent application for this patent is not a disclaimer of any claim element presented in the application as filed: those skilled in the art cannot reasonably be expected to draft a claim that would literally encompass all possible equivalents, many equivalents will be unforeseeable at the time of the amendment and are beyond a fair interpretation of what is to be surrendered (if anything), the rationale underlying the amendment may bear no more than a tangential relation to many equivalents, and/or there are many other reasons the applicant cannot be expected to describe certain insubstantial substitutes for any claim element amended.

Potentially inventive concepts are recited in the following clauses.
Clause 1. A modified membrane bioreactor (MBR) system for removing per- and polyfluoroalkyl substances (PFAS) from a flow of wastewater and/or landfill leachate, the system comprising:
   an MBR configured to receive the flow of wastewater and/or landfill leachate having PFAS therein, the MBR including biomass, a diffuser subsystem, and a membrane filter subsystem;
   an impregnation subsystem including at least one impregnation tank and at least one mixer, the impregnation subsystem configured to receive a flow of mixed liquor from the MBR and a predetermined amount powered activated carbon (PAC) to maintain a predetermined ratio of PAC to biomass in the MBR and configured to blend the biomass with the PAC to form PAC-impregnated biological flocs; and
   an outlet coupled to the at least one impregnation tank configured to output a flow of PAC-impregnated biological flocs to the MBR such that the PAC-impregnated biological flocs in the MBR adsorb to and remove a majority of the PFAS from the flow of wastewater and/or landfill leachate such that the MBR outputs a flow of treated wastewater and/or landfill leachate having a majority of the PFAS removed.
Clause 2. The system of clause 1 in which the predetermined ratio of PAC to biomass is in the range of about 0.1:1 to about 5:1.
Clause 3. The system of clause 1 in which the predetermined ratio of PAC to biomass is set to enhance at least one of: the removal of PFAS from the flow of wastewater and/or landfill leachate, membrane filtration, or nitrification and the removal of biodegradable organic matter as measured by biochemical oxygen demand (BOD).
Clause 4. The system of clause 1 in which the MBR is configured to output a waste flow of PAC-impregnated biological flocs having PFAS adsorbed thereto.
Clause 5. The system of clause 4 in which the waste flow of PAC-impregnated biological flocs having PFAS adsorbed thereto is set to control a biological population of microorganisms in mixed liquor in the MBR.
Clause 6. The system of clause 4 in which a waste flow of PAC-impregnated biological flocs having PFAS adsorbed thereto is used to create a waste product.
Clause 7. The system of clause 6 in which the waste product is directed to at least one of: a supercritical water oxidation (SCWO) process or a plasma gasification subsystem configured to destroy the waste product including the PAC-impregnated biological flocs having PFAS adsorbed thereto.
Clause 8. The system of clause 1 in which the PAC-impregnated biological flocs increase treatment kinetics thereby reducing the required hydraulic retention time and size of the MBR.
Clause 9. The system of clause 1 in which at least one impregnation tank is sized and configured to augment PAC impregnation into the biological flocs.
Clause 10. The system of clause 1 in which blending intensity in the impregnation tank is configured to augment PAC impregnation into the biological flocs.
Clause 11. The system of clause 1 in which the PAC-impregnated biological flocs enhance membrane filtration.
Clause 12. A modified membrane bioreactor (MBR) system for removing per- and polyfluoroalkyl substances (PFAS) from a flow of wastewater and/or landfill leachate, the system comprising:
   an MBR configured to receive a flow of wastewater and/or landfill leachate having PFAS therein, the membrane bioreactor including biomass, a diffuser subsystem, and a membrane filter subsystem;
   an impregnation subsystem including at least one impregnation tank and at least one mixer, the impregnation subsystem configured to receive a flow of mixed liquor from the MBR and a predetermined amount granular activated carbon (GAC) reactivation waste product to maintain a predetermined ratio of GAC reactivation waste product to biomass in the MBR and configured to blend the biomass with the GAC reactivation waste product to form GAC reactivation waste product-impregnated biological flocs; and
   an outlet coupled to the at least one impregnation tank configured to output a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate such that the MBR outputs a flow of treated wastewater and/or landfill leachate having a majority of the PFAS removed.
Clause 13. The system of clause 12 in which the predetermined ratio of GAC reactivation waste product to biomass is in the range of about 0.1:1 to about 5:1.
Clause 14. The system of clause 12 in which the predetermined ratio of GAC reactivation waste product to biomass is set to enhance at least one of: the removal of PFAS from the flow of wastewater and/or landfill leachate, membrane filtration, or nitrification and the removal of biodegradable organic matter as measured by biochemical oxygen demand (BOD).
Clause 15. The system of clause 12 in which the MBR is configured to output a waste flow of GAC reactivation waste product-impregnated biological flocs having PFAS adsorbed thereto.
Clause 16. The system of clause 15 in which the waste flow of GAC reactivation waste product having PFAS adsorbed thereto is set to control a biological population of microorganisms in mixed liquor in the MBR.
Clause 17. The system of clause 15 in which the waste flow of GAC reactivation waste product-impregnated biological flocs having PFAS adsorbed thereto is used to create a waste product.
Clause 18 The system of clause 17 in which the waste product is directed to at least one of: a supercritical water oxidation (SCWO) process or a plasma gasification subsystem configured to destroy the waste product including the GAC reactivation waste product-impregnated biological flocs and the PFAS adsorbed thereto.
Clause 19. The system of clause 12 in which the GAC reactivation waste product-impregnated biological flocs increase treatment kinetics thereby reducing the required hydraulic retention time and size of the MBR.
Clause 20. The system of clause 12 in which the at least one impregnation tank is sized and configured to augment GAC reactivation waste product impregnation into the biological flocs.
Clause 21. The system of clause 12 in which blending intensity in the impregnation tank is configured to augment GAC reactivation waste product impregnation into the biological flocs.
Clause 22. The system of clause 12 in which the GAC reactivation waste product-impregnated biological flocs enhance membrane filtration.
Clause 23. A modified membrane bioreactor (MBR) method for removing per- and polyfluoroalkyl substances (PFAS) from a flow of wastewater and/or landfill leachate, the method comprising:
   receiving a flow of mixed liquor from the MBR and a predetermined amount powered activated carbon (PAC) to maintain a predetermined ratio of PAC to biomass in the MBR;
   blending the biomass with the PAC to form PAC-impregnated biological flocs;
   outputting a flow of PAC-impregnated biological flocs to the MBR such that the PAC-impregnated biological flocs in the MBR adsorb to and remove a majority of the PFAS from the flow of wastewater and/or landfill leachate; and
   outputting a flow of treated wastewater and/or landfill leachate having a majority of the PFAS removed.
Clause 24. The method of clause 23 in which the predetermined ratio of PAC to biomass is in the range of about 0.1:1 to about 5:1.
Clause 25. The method of clause 23 in which the predetermined ratio of PAC to biomass is set to enhance at least one of: the removal of PFAS from the flow of wastewater and/or landfill leachate, membrane filtration, or nitrification and the removal of biodegradable organic matter as measured by biochemical oxygen demand (BOD).
Clause 26. The method of clause 23 including outputting a waste flow of PAC-impregnated biological flocs having PFAS adsorbed thereto.
Clause 27. The method of clause 26 in which the waste flow of PAC-impregnated biological flocs having PFAS adsorbed thereto is set to control a biological population of microorganisms in mixed liquor in the MBR.
Clause 28. The method of clause 26 in which the waste flow of PAC-impregnated biological flocs having PFAS adsorbed thereto is used to create a waste product.
Clause 29. The method of clause 28 in which the waste product including the PAC-impregnated biological flocs having PFAS adsorbed thereto is directed to at least one of: a supercritical water oxidation (SCWO) process or a plasma gasification subsystem configured to destroy the waste product.
Clause 30. The method of clause 23 in which the PAC-impregnated biological flocs increase treatment kinetics thereby reducing the required hydraulic retention time and size of the MBR.
Clause 31. The method of clause 23 in which the blending includes blending at an intensity which augments PAC impregnation into the biological flocs.
Clause 32. The system of clause 23 in which the PAC-impregnated biological flocs enhance membrane filtration.
Clause 33. A modified membrane bioreactor (MBR) method for removing per- and polyfluoroalkyl substances (PFAS) from a flow of wastewater and/or landfill leachate, the method comprising:
   receiving a flow of mixed liquor from the MBR and a predetermined amount granular activated carbon (GAC) reactivation waste product to maintain a predetermined ratio of GAC reactivation waste product to biomass in the MBR;
   blending the biomass with the GAC reactivation waste product to form GAC reactivation waste product-impregnated biological flocs;
   outputting a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate; and
   outputting a flow of treated wastewater and/or landfill leachate having a majority of the PFAS removed.
Clause 34. The method of clause 33 in which the predetermined ratio of GAC reactivation waste product to biomass is in the range of about 0.1:1 to about 5:1.
Clause 35. The method of clause 33 in which the predetermined ratio of GAC reactivation waste product to biomass is set to enhance at least one of: the removal of PFAS from the flow of wastewater and/or landfill leachate, membrane filtration, or nitrification and the removal of biodegradable organic matter as measured by biochemical oxygen demand (BOD).
Clause 36. The method of clause 33 including outputting a waste flow of GAC reactivation waste product-impregnated biological flocs having PFAS adsorbed thereto.
Clause 37. The method of clause 36 in which the waste flow of GAC reactivation waste product-impregnated biological flocs having PFAS adsorbed thereto is set to control a biological population of microorganisms in mixed liquor in the MBR.
Clause 38. The method of clause 36 in which the waste flow of GAC reactivation waste product-impregnated biological flocs having PFAS adsorbed thereto is used to create a waste product.
Clause 39. The method of clause 38 in which the waste product is directed to at least one of: a supercritical water oxidation (SCWO) process or a plasma gasification subsystem configured to destroy the waste product including the GAC reactivation waste product-impregnated biological flocs having the PFAS adsorbed thereto.
Clause 40. The method of clause 33 in which the GAC reactivation waste product-impregnated biological flocs increase treatment kinetics thereby reducing the required hydraulic retention time and size of the MBR.
Clause 41. The method of clause 33 in which the blending includes blending at an intensity which augments GAC reactivation waste product impregnation into the biological flocs.
Clause 42. The method of clause 33 in which the GAC reactivation waste product-impregnated biological flocs enhance membrane filtration.

## Claims

1. A modified membrane bioreactor (MBR) system for removing per- and polyfluoroalkyl substances (PFAS) from a flow of wastewater and/or landfill leachate, the system comprising:
an MBR configured to receive a flow of wastewater and/or landfill leachate having PFAS therein, the membrane bioreactor including biomass, a diffuser subsystem, and a membrane filter subsystem;
an impregnation subsystem including at least one impregnation tank and at least one mixer, the impregnation subsystem configured to receive a flow of mixed liquor from the MBR and a predetermined amount granular activated carbon (GAC) reactivation waste product to maintain a predetermined ratio of GAC reactivation waste product to biomass in the MBR and configured to blend the biomass with the GAC reactivation waste product to form GAC reactivation waste product-impregnated biological flocs; and
an outlet coupled to the at least one impregnation tank configured to output a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate such that the MBR outputs a flow of treated wastewater and/or landfill leachate having a majority of the PFAS removed.

2. The system of claim 1 in which the predetermined ratio of GAC reactivation waste product to biomass is in the range of about 0.1:1 to about 5:1.

3. The system of claim 1 in which the MBR is configured to output a waste flow of GAC reactivation waste product-impregnated biological flocs having PFAS adsorbed thereto.

4. The system of claim 3 in which the waste flow of GAC reactivation waste product having PFAS adsorbed thereto is set to control a biological population of microorganisms in mixed liquor in the MBR.

5. The system of claim 1 in which the at least one impregnation tank is sized and configured to augment GAC reactivation waste product impregnation into the biological flocs.

6. The system of claim 1 in which blending intensity in the impregnation tank is configured to augment GAC reactivation waste product impregnation into the biological flocs.

7. A modified membrane bioreactor (MBR) method for removing per- and polyfluoroalkyl substances (PFAS) from a flow of wastewater and/or landfill leachate, the method comprising:
receiving a flow of mixed liquor from the MBR and a predetermined amount granular activated carbon (GAC) reactivation waste product to maintain a predetermined ratio of GAC reactivation waste product to biomass in the MBR;
blending the biomass with the GAC reactivation waste product to form GAC reactivation waste product-impregnated biological flocs;
outputting a flow of GAC reactivation waste product-impregnated biological flocs to the MBR such that the GAC reactivation waste product-impregnated biological flocs in the MBR adsorb to and remove a majority of the PFAS from the flow of wastewater and/or landfill leachate; and
outputting a flow of treated wastewater and/or landfill leachate having a majority of the PFAS removed.

8. The method of claim 7 in which the predetermined ratio of GAC reactivation waste product to biomass is in the range of about 0.1:1 to about 5:1.

9. The method of claim 7 including outputting a waste flow of GAC reactivation waste product-impregnated biological flocs having PFAS adsorbed thereto.

10. The method of claim 9 in which the waste flow of GAC reactivation waste product-impregnated biological flocs having PFAS adsorbed thereto is set to control a biological population of microorganisms in mixed liquor in the MBR.

11. The method of claim 7 in which the blending includes blending at an intensity which augments GAC reactivation waste product impregnation into the biological flocs.
